# EUROPÄISCHE PATENTANMELDUNG

(11) **EP 3 670 172 A1**
(43) Veröffentlichungstag der Anmeldung: **24.06.2020**
(21) Anmeldenummer: 18000983.9
(22) Anmeldetag: 19.12.2018
(51) Int. Cl.: B32B 1/08, B32B 27/08, B32B 27/32, B32B 27/34, B32B 7/12, B29C 48/09, B29C 48/18, B29C 48/335, F16L 9/12, F16L 9/133

(54) **MEHRSCHICHTROHR SOWIE VERFAHREN ZUM HERSTELLEN EINES SOLCHEN MEHRSCHICHTROHRES**

(71) Anmelder: Voss Automotive GmbH, 51688 Wipperfürth (DE)
(72) Erfinder: Spelthann, Heinz, 47661 Issum (DE); de Beer, Daniel, 51766 Engelskirchen (DE); Zieris, Volker, 51399 Burscheid (DE)
(74) Vertreter: Rebbereh, Cornelia

(57) **Zusammenfassung**

Bei einem Mehrschichtrohr (1), umfassend eine mehrschichtige Rohrwandung (10) mit zumindest einer Innenschicht (12) und zumindest einer Außenschicht (14), besteht die zumindest eine Außenschicht (14) aus Polyphthalamid (PPA) und die zumindest eine Innenschicht (12) aus Polypropylen (PP). Bei einem Verfahren zum Herstellen eines solchen Mehrschichtrohres (1) werden zumindest eine Innenschicht aus Polypropylen (PP) und zumindest eine Außenschicht aus Polyphthalamid (PPA) unter Verwendung zumindest eines Haftvermittlers übereinander extrudiert unter Verwendung einer Extrusionseinheit (2) mit thermisch voneinander getrennten Schmelzbereichen (20,21,22) zum Schmelzen der Schichtmaterialien.

## Beschreibung

Die Erfindung betrifft ein Mehrschichtrohr, umfassend eine mehrschichtige Rohrwandung, mit zumindest einer Innenschicht und zumindest einer Außenschicht, sowie ein Verfahren zum Herstellen eines solchen Mehrschichtrohres.
Einschichtige Rohre und Mehrschichtrohre sowie Verfahren zu deren Herstellung sind im Stand der Technik bekannt. Beispielsweise sind für zahlreiche Anwendungen im Automotivebereich einschichtige Kunststoffrohre aus PA12, also Polyamid 12, bekannt. Derartige Rohre aus PA12 können als Meterware extrudiert werden unter Zuhilfenahme eines Extrusionswerkzeugs mit einem Extrusionskopf, in dem das zum Herstellen der Rohre verwendete Material geschmolzen und nachfolgend aus diesem herausextrudiert wird. Bei Verwendung von PA12 als Material zum Herstellen einschichtiger Rohre können diese durch Heißbiegen in eine gewünschte Form gebracht werden. Nach dem Heißbiegevorgang bleiben die Rohre formstabil und können daher an die unterschiedlichsten Gegebenheiten in einem Einbauraum, beispielsweise in einem Fahrzeug, angepasst werden. Ferner ist PA12 medienbeständig gegen unterschiedlichste Medien, die durch ein PA12-Rohr strömen können, wie beispielsweise Öl. Ebenfalls weist PA12 eine Beständigkeit gegen Umwelteinflüsse, wie UV-Strahlung, auf. Ferner weist ein aus PA12 hergestelltes Rohr ein gewisses Maß an Flexibilität auf und ist schweißbar, insbesondere durch Laserschweißen mit einem Leitungsverbinder verbindbar. Ferner nimmt PA12 nur in geringem Maße Feuchtigkeit auf, so dass es auch hierdurch besonders für die Verwendung für Rohre, durch die Medien strömen, geeignet ist. Aufgrund von wiederkehrenden Verknappungen von PA12 auf dem Weltmarkt kommt es zu fortlaufenden Preissteigerungen und Lieferschwierigkeiten. Um dem zu entgehen, sollen Alternativen zur Verwendung von PA12 gefunden werden.

Bei der Suche nach Alternativen zu PA12 stellen sich allerdings weitere Probleme. Beispielweise wäre PA612 bezüglich seiner Materialeigenschaften in Bezug auf Extrudieren und Medien- bzw. Umweltbeständigkeit ein Material, das grundsätzlich für die Herstellung einschichtiger Rohre gut verwendbar wäre. Allerdings ist es kaum möglich, ein aus PA612 hergestelltes Rohr mit den für PA12-Rohre verwendeten Verfahren und Werkzeugen zu biegen und dauerhaft in Form zu bringen. Dementsprechend müssten neue Verfahren und Werkzeuge hierfür entworfen werden, was mit erheblichen Zusatzkosten verbunden wäre.

Es ist ferner bekannt, Mehrschichtrohre, die einen mehrschichtigen Rohrwandungsaufbau mit zumindest einer Innenschicht und zumindest einer Außenschicht aufweisen, herzustellen. Zumeist werden für die einzelnen Schichten unterschiedliche Materialien verwendet, wobei die zum Extrudieren verwendeten Extrusionswerkzeuge bzw. Extrusionsköpfe von Extrusionswerkzeugen zum Verarbeiten der einzelnen für die unterschiedlichen Schichten verwendeten Materialien voneinander getrennte Schmelzbereiche und dementsprechend unterschiedliche Temperaturzonen aufweisen. Ein Beispiel hierfür sind z.B. Extrusionsköpfe der Firma ETA Kunststofftechnologie GmbH. Mittels solcher Extrusionswerkzeuge bzw. Extrusionseinheiten, wie Extrusionsköpfen, können verschiedene Materialien mit gleichen oder geringfügig unterschiedlichen Schmelz- und Verarbeitungstemperaturen zu Mehrschichtrohren extrudiert werden. Die Schmelz- und Massetemperaturen zweier Materialien, die zu einem Mehrschichtrohr verarbeitet werden sollen, liegen bis zu 60 °C zwischen den einzelnen Schichten auseinander. Materialpaarungen, die sehr stark voneinander abweichende Schmelz- und/oder Verarbeitungstemperaturen aufweisen, können standardmäßig nicht in einem Extrusionswerkzeug zusammen verarbeitet werden. Bei stark voneinander abweichenden Schmelz- und/oder Verarbeitungstemperaturen von verschiedenen Materialien, die im Extrusionsverfahren übereinander geschichtet werden sollen, kann es durch Wärmeübertragung zwischen den einzelnen Schmelzkammern bzw. Schmelzbereichen eines Extrusionskopfes und die damit verbundene Wärmeangleichung in allen Bereichen des Extrusionskopfes zu Problemen beim Extrudieren des Rohres kommen, da durch die unterschiedlichen Viskositäten der einzelnen Schichtmaterialien, die beim Extrudieren übereinander geschichtet werden sollen, ein bei niedrigen Temperaturen schmelzendes Material verlaufen und durch das bei höheren Temperaturen schmelzende Material verdrängt werden kann. Hierdurch kann es zu nicht kontinuierlichen Schichtdicken der einzelnen Materialschichten einer solchen mehrschichtigen Rohrwandung eines Mehrschichtrohres kommen. Dies ist üblicherweise nicht erwünscht und wird bei Extrusionsköpfen der Firma ETA Kunststofftechnologie GmbH durch Vorsehen von Isolationsspalten zwischen Verteilerscheiben eines Extrusionskopfes vermieden.

Der vorliegenden Erfindung liegt nun die Aufgabe zugrunde, ein Mehrschichtrohr, umfassend eine mehrschichtige Rohrwandung mit zumindest einer Innenschicht und zumindest einer Außenschicht, sowie ein Verfahren zum Herstellen eines solchen Mehrschichtrohres vorzusehen, bei dem das Mehrschichtrohr kostengünstig ohne Verwendung von PA12 hergestellt werden kann, formstabil und flexibel ist und ein Biegen und Konfektionieren des Rohres mit den derzeit üblichen Verfahren und Werkzeugen, die für das Biegen und Konfektionieren von PA12-Rohren verwendet werden, möglich ist.

Die Aufgabe wird für ein Mehrschichtrohr nach dem Oberbegriff des Anspruchs 1 dadurch gelöst, dass die zumindest eine Außenschicht aus Polyphthalamid (PPA) und die zumindest eine Innenschicht aus Polypropylen (PP) besteht. Für ein Verfahren nach dem Oberbegriff des Anspruchs 7 wird die Aufgabe dadurch gelöst, dass zumindest eine Innenschicht aus Polypropylen und zumindest eine Außenschicht aus Polyphthalamid unter Verwendung zumindest eines Haftvermittlers übereinander extrudiert werden unter Verwendung einer Extrusionseinheit mit technisch voneinander getrennten Schmelzbereichen zum Schmelzen der Schichtmaterialien. Weiterbildungen der Erfindung sind in den abhängigen Ansprüchen definiert.

Dadurch wird ein Mehrschichtrohr geschaffen, das eine mehrschichtige Rohrwandung mit zumindest einer Innenschicht und zumindest einer Außenschicht aufweist. Die zumindest eine Außenschicht besteht aus Polyphthalamid (PPA) und die zumindest eine Innenschicht aus Polypropylen (PP). Polyphthalamid (PPA) weist eine ähnlich gute Beständigkeit gegen Umwelteinflüsse, insbesondere UV-Strahlung auf, wie PA12. Ebenfalls ist es möglich, ein PPA umfassendes Mehrschichtrohr zu konfektionieren und insbesondere formzubiegen unter Verwendung von Werkzeugen und Verfahren, die für das Formbiegen und Konfektionieren von Rohren aus PA12 verwendet werden. Ferner ist es möglich, PPA zu schweißen, insbesondere reibzuschweißen oder laserzuschweißen. Ferner sind Rohre mit zumindest einer Schicht aus PPA druckbeständig und weisen eine vergleichsweise geringe Wasseraufnahmefähigkeit sowie eine hohe Temperaturbeständigkeit auf, wobei letztere beispielsweise mit Rohren aus PA12 nicht gegeben ist.

Das Vorsehen zumindest einer Innenschicht aus Polypropylen (PP) erweist sich aufgrund von dessen Medienbeständigkeit insbesondere gegenüber Kühlwasser als besonders vorteilhaft. Polypropylen wirkt hier als sehr gute Sperrschicht gegen das Eindringen von Medium, das durch das innere Lumen des Mehrschichtrohres, das von dessen mehrschichtiger Rohrwandung umgeben und somit definiert wird, strömt. Polypropylen ist nicht uneingeschränkt zur Herstellung einer einschichtigen oder einlagigen vorkonfektionierten, beispielsweise formstabil gebogenen Rohrleitung geeignet. Allerdings ist Polypropylen im Hinblick auf hohe herrschende Betriebstemperaturen und/oder hohen Druck ein weniger geeigneter Werkstoff.

Dementsprechend erweist es sich als besonders vorteilhaft, dass die Rohrwandung des Mehrschichtrohrs zumindest eine Außenschicht aus Polyphthalamid (PPA) und zumindest eine Innenschicht aus Polypropylen (PP) umfasst, da hierdurch eine optimale Kombination der jeweiligen positiven Eigenschaften von PPA und PP möglich ist. Insbesondere kann ein solches Mehrschichtrohr sehr gut an die jeweiligen Anwendungen angepasst werden. Z.B. kann das Verhältnis der Schichtdicke der zumindest einen Schicht aus dem teureren Material PPA und der zumindest einen Schicht aus dem demgegenüber günstigeren Material PP an einen herrschenden Betriebsdruck und ggf. erforderliche Rückstellkräfte im Aufdornbereich einer Verbindung von Mehrschichtrohr und Leitungsverbinder oder eine beim Schweißen, insbesondere Reibschweißen oder Laserschweißen, erforderliche Schichtdicke angepasst werden. Vorteilhaft wird die aus dem teureren Material bestehende zumindest eine PPA-Außenschicht lediglich mit einer solchen Schichtdicke vorgesehen, dass in Kombination mit der kostengünstigeren zumindest einen PP-Schicht der mehrschichtigen Rohrwandung des Mehrschichtrohres die anwendungsspezifisch erforderlichen Druck- und Halteanforderungen zum Halten des Mehrschichtrohres am Leitungsverbinder erfüllt werden. Dementsprechend ist es möglich, ein vergleichsweise kostengünstiges Mehrschichtrohr vorzusehen, das die positiven Eigenschaften des Materials PPA und die positiven Eigenschaften des Materials PP miteinander kombiniert.

Vorteilhaft ist zwischen der Außenschicht aus PPA und der Innenschicht aus PP zumindest eine Haftvermittlerschicht angeordnet zum Verbinden der Außenschicht aus PPA mit der Innenschicht aus PP. PPA und PP weisen sehr stark voneinander abweichende Schmelzpunkte und Verarbeitungstemperaturen auf. Es hat sich jedoch unvermittelt und unerwartet gezeigt, dass das PPA als aromatisches Polyamid über einen Haftvermittler mit PP gekoppelt werden kann. Bislang ist es nur bekannt, eine Kopplung über Haftvermittler mit einem aliphatischen Polyamid, wie PA12, zu ermöglichen. Solche aromatischen Polyamide, wie PPA, sind durch einen Benzolring bzw. einen Mesomerie-Effekt gekennzeichnet und reich an P-Elektronen in Doppelbindungen zwischen C-Atomen. Sie enthalten aromatische Molekülbestandteile, die die Reaktivität der Amidgruppe (NH₂- Gruppe) im Polymer mehr stabilisieren als dies bei aliphatischen Polyamiden der Fall ist, und somit die Reaktivität der Amid-Bindung in Polyamiden herabsetzen, wodurch nicht zu erwarten war, dass eine Verbindung oder eine ausreichende Verbindung zwischen PPA und PP mittels eines Haftvermittlers entstehen könnte.

Die Haftvermittlerschicht bzw. der Haftvermittler weist besonders bevorzugt eine Schmelztemperatur auf, die in einem Temperaturbereich von PP liegt. PPA weist insbesondere einen Schmelzpunkt im Bereich von 250 bis 270 °C auf. Polypropylen weist demgegenüber eine Schmelztemperatur von etwa 160 °C auf. Ein für die zumindest eine Haftvermittlerschicht verwendbarer Haftvermittler kann daher beispielsweise eine Schmelztemperatur von etwa 160 °C aufweisen. In diesem Bereich kann beispielsweise ein Propylen-Homopolymer basierter Haftvermittler verwendet werden. Ein solcher ist beispielsweise unter der Bezeichnung ADMER® QB510E der Firma Mitsui Chemicals Europe GmbH bekannt. Ein solcher Propylen-Homopolymer basierter Haftvermittler eignet sich sehr gut zum Verbinden der beiden insbesondere bereits aufgrund ihrer sehr stark unterschiedlichen Schmelz- und Verarbeitungstemperaturen eher schlecht bis gar nicht miteinander verarbeitbaren Polymere PPA und PP. Alternativ oder zusätzlich zu einem Propylen-Homopolymer basierten Haftvermittler kann auch ein Haftvermittler auf Copolymerbasis verwendet werden.

Um problemlos die für die einzelnen Materialschichten erforderlichen Schmelztemperaturen vorsehen zu können, ohne die Gefahr, dass das jeweils bei der niedrigsten oder jedenfalls unterhalb der höchsten Temperatur schmelzende und zu verarbeitende Material durch das bei einer höheren bzw. der höchsten Temperatur schmelzende Material verdrängt wird und es somit zu keinem kontinuierlichen Schichtdickenverlauf der einzelnen Materialschichten kommt, sind die einzelnen Schmelzbereiche oder Schmelzkammern innerhalb der Extrusionseinheit, insbesondere eines Extrusionskopfes, eines Extrusionswerkzeugs durch thermische Trenneinrichtungen thermisch voneinander getrennt. Derartige thermische Trenneinrichtungen können als zwischen den Schmelzbereichen, insbesondere Schmelzkammern, angeordnete Isolierbereiche ausgebildet sein. Hierdurch wird es möglich, einen unkontrollierten Wärmeübergang zwischen den einzelnen Schmelzbereichen zu verhindern. Dementsprechend kann der jeweilige Schmelzbereich für das jeweilige zu schmelzende und verarbeitende Material, hier PPA, PP und das Material der Haftvermittlerschicht, insbesondere ein Propylen-Homopolymer basierter oder Copolymer basierter Haftvermittler, geeignet temperiert werden, ohne das Material in dem zumindest einen benachbarten Schmelzbereich zu beeinflussen. Bevorzugt sind die Schmelzbereiche getrennt voneinander beheizbar und/oder kühlbar, so dass für jeden Schmelzbereich individuell eine gewünschte passende Temperatur eingestellt und gehalten werden kann. Hierdurch ist ein homogener Schichtauftrag der jeweiligen Materialschicht zum Erzeugen eines Mehrschichtrohres mit kontinuierlichem Schichtdickenverlauf der einzelnen Materialschichten der mehrschichtigen Rohrwandung des Mehrschichtrohres möglich. Es kann somit ein individuell auf das Viskositätsverhalten des jeweiligen Materials der einzelnen Materialschichten ausgerichtetes Beheizen der einzelnen Schmelzbereiche mit den unterschiedlichen Materialien der einzelnen Materialschichten der mehrschichtigen Rohrwandung des Mehrschichtrohres erfolgen. Hierdurch kann der gewünschte kontinuierliche Schichtdickenverlauf der mehrschichtigen Wandung des Mehrschichtrohres vorgesehen werden.

Die Extrusionseinheit, insbesondere der Extrusionskopf, des Extrusionswerkzeugs bzw. Extruders wird beim erfindungsgemäßen Verfahren zum Herstellen eines solchen Mehrschichtrohres in einem ersten Schmelzbereich zum Schmelzen von PPA mit einer Temperatur von 280 bis 320 °C, insbesondere einer Temperatur von ≥ 290 bis ≤ 310 °C, in einem zweiten, an den ersten Schmelzbereich angrenzenden, gegenüber diesem durch eine erste thermische Trenneinrichtung abgetrennten Schmelzbereich zum Schmelzen eines Haftvermittlers mit einer Temperatur von 180 bis 260 °C, insbesondere einer Temperatur von ≥ 190 bis ≤250 °C, und in einem dritten, an den zweiten Schmelzbereich angrenzenden, gegenüber diesem durch eine zweite thermische Trenneinrichtung abgetrennten Schmelzbereich zum Schmelzen von PP mit einer Temperatur von 180 bis 240 °C, insbesondere einer Temperatur von ≥ 190 bis ≤ 230°C, betrieben, somit die drei Schmelzbereiche entsprechend betrieben. Das PPA kann in dem ersten Schmelzbereich mit einer Schmelztemperatur t₁ von t₁ = 250 bis 270 °C geschmolzen werden, der zumindest eine Haftvermittler in dem zweiten, an den ersten Schmelzbereich angrenzenden, gegenüber diesem durch die erste thermische Trenneinrichtung abgetrennten Schmelzbereich mit einer Schmelztemperatur t₂ von t₂ = 150 bis 170 °C, insbesondere einer Schmelztemperatur t₂ von etwa 160 °C, und das PP in dem dritten, an den zweiten Schmelzbereich angrenzenden, gegenüber diesem durch die zweite thermische Trenneinrichtung abgetrennten Schmelzbereich mit einer Schmelztemperatur t₃ von t₃ = 150 bis 170 °C, insbesondere einer Schmelztemperatur t₃ von etwa 160 °C, geschmolzen werden.

Insbesondere können der erste und der dritte Schmelzbereich ebenfalls nach außen zur Umgebung der Extrusionseinheit hin über jeweilige thermische Trenneinrichtungen thermisch abgetrennt sein oder werden, so dass die einzelnen Schmelzbereiche bzw. Schmelzkammern optimal an das jeweils darin zu schmelzende und zu verarbeitende Material, hier PPA, PP und das Haftvermittlermaterial angepasst, beheizt und gekühlt werden können, ohne von den benachbarten Schmelzbereichen und/oder der Umgebung der Extrusionseinheit beeinflusst zu werden. Hierdurch ist es möglich, optimale kontinuierliche Schichtdickenverläufe der einzelnen Materialschichten der mehrschichtigen Rohrwandung des Mehrschichtrohres zu erzeugen.

Das Verhältnis der Schichtdicke der Außenschicht aus PPA zu der Haftvermittlerschicht kann beispielsweise etwa 12:1 bis 4,5:1, insbesondere etwa 10:1, betragen, und das Verhältnis der Schichtdicke der Außenschicht aus PPA zur Innenschicht aus PP etwa 3,5:1 bis 1,5:1, insbesondere etwa 2:1, betragen. Weist das Mehrschichtrohr beispielsweise einen Außendurchmesser von 13 mm und eine Wandstärke von 1,5 mm auf, kann die Außenschicht aus PPA mit einer Schichtdicke von 1 mm, eine Haftvermittlerschicht mit einer Schichtdicke von 0,1 mm und eine Innenschicht aus PP mit einer Schichtdicke von 0,4 mm vorgesehen sein bzw. durch Extrudieren erzeugt werden. Dementsprechend ist die Rohrwandung des Mehrschichtrohres in diesem Falle dreischichtig, bestehend aus der Außenschicht aus PPA, der Haftvermittlerschicht als mittlerer Schicht und der Innenschicht aus PP. Sofern es sich als sinnvoll erweist, können auch noch weitere Materialschichten vorgesehen werden, insbesondere nicht nur eine Außenschicht aus PPA, sondern mehr als eine bzw. nicht nur ein Schicht aus PP, sondern ggf. auch mehr als nur eine solche PP-Innenschicht. Grundsätzlich können auch mehrere Haftvermittlerschichten vorgesehen werden, wenn sich dies als vorteilhaft erweist.

Um den Kontakt der Haftvermittlerschicht und/oder der Außenschicht aus PPA mit durch ein inneres Lumen des Mehrschichtrohres strömendem Medium zu vermeiden, weist vorteilhaft die Innenschicht aus PP eine Schichtdicke auf, die größer ist als die lichte Höhe von Einschlagdornen eines Dornprofils eines Leitungsverbinders, auf dem das Mehrschichtrohr aufzudornen oder aufgedornt ist. Insbesondere beträgt die Dicke der Innenschicht aus PP ≥ 0,25 mm. Durch Vorsehen einer solchen Mindestschichtdicke der Innenschicht aus Polypropylen (PP) ist es möglich, auch bei Aufdornen des Mehrschichtrohres auf einen Dornverbinder eines Leitungsverbinders eine Zerstörung der medienbeständigen Schicht aus PP sicher zu vermeiden und somit zu vermeiden, dass die insbesondere umlaufenden Dornen oder Zähne des Einschlagdorns eines solchen Dornprofils eines Leitungsverbinders die medienbeständige Schicht aus PP durchdringen und somit beschädigen oder zerstören.

Dementsprechend weist vorteilhaft die medienbeständige Innenschicht aus Polypropylen eine geringere Schichtdicke auf als die gegen Umwelteinflüsse schützende, eine Formstabilität und Flexibilität schaffende zumindest eine Außenschicht aus PPA. Die zumindest eine Außenschicht aus PPA kann somit vorteilhaft nur so stark bzw. dick ausgebildet werden, dass sie in Kombination mit der kostengünstigeren Innenschicht aus PP die jeweiligen anwendungsspezifischen Anforderungen an Druckstabilität und Umweltbeständigkeit sowie Biegbarkeit erfüllt.

Zur näheren Erläuterung der Erfindung wird im Folgenden ein Ausführungsbeispiel von dieser näher anhand der Zeichnungen beschrieben. Diese zeigen in:

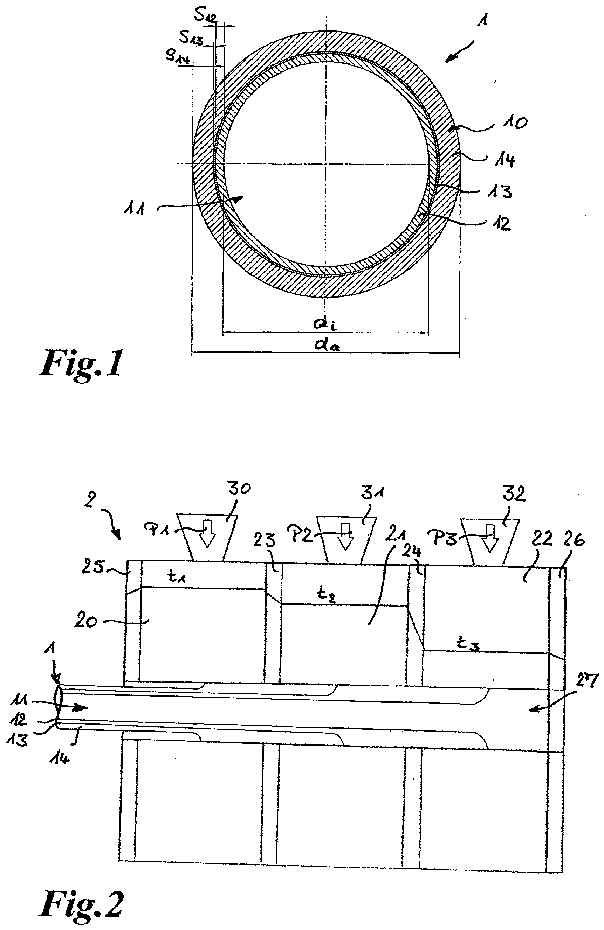

- Figur 1: eine Querschnittsansicht durch ein erfindungsgemäßes Mehrschichtrohr mit einer Innenschicht aus PP, einer Haftvermittlerschicht und einer Außenschicht aus PPA und
- Figur 2: eine schematische Schnittansicht einer erfindungsgemäßen Extrusionseinheit zum Durchführen des erfindungsgemäßen Verfahrens zum Herstellen eines Mehrschichtrohres mit einer Innenschicht aus PP, einer Haftvermittlerschicht und einer Außenschicht aus PPA, wobei die Extrusionseinheit drei Schmelzbereiche umfasst, die jeweils durch thermische Trenneinrichtungen in Form von Isolierbereichen thermisch gegeneinander abgetrennt sind und zum Schmelzen von PPA, dem Haftvermittler und PP dienen.

In Figur 1 ist eine Querschnittsansicht eines Mehrschichtrohres 1, umfassend eine mehrschichtige Rohrwandung 10 sowie ein inneres Lumen 11, gezeigt. Durch das innere Lumen 11 können unterschiedlichste Medien strömen. Beispielsweise kann das Mehrschichtrohr 1 für Automotive-Anwendungen vorgesehen sein, so dass verschiedenste im Automobilbereich verwendete Medien durch das

Mehrschichtrohr bzw. dessen inneres Lumen 11 strömen können, wie z.B. Öl, Kühlwasser etc.

Die mehrschichtige Rohrwandung 10 umfasst drei Schichten, eine Innenschicht 12, eine Haftvermittlerschicht 13 sowie eine Außenschicht 14. Die Innenschicht 12 besteht aus Polypropylen (PP), während die Außenschicht 14 aus Polyphthalamid (PPA) besteht. Zwischen der Innenschicht 12 und der Außenschicht 14 ist die Haftvermittlerschicht 13 angeordnet, die aus einem die beiden Schichten 12 und 14 miteinander haftend verbindenden Material, hier insbesondere einem Propylen-Homopolymer basierten oder Copolymerbasierten Material als Haftvermittler besteht. Beispielsweise kann der unter der Bezeichnung ADMER® QB510E der Firma Mitsui Chemicals Europe GmbH vertriebene Haftvermittler verwendet werden.

Das Mehrschichtrohr 1 kann beispielsweise einen Außendurchmesser dₐ von 13 mm und einen Innendurchmesser dᵢ von 10 mm mit einer Toleranz von +/- 0,2 mm aufweisen. Die Wandstärke der mehrschichtigen Rohrwandung 10 beträgt dementsprechend 1,5 mm, wobei beispielweise die Außenschicht 14 eine Schichtdicke von s₁₄ von 1 mm mit einer Toleranz von +/- 0,1 mm aufweisen kann. Die Haftvermittlerschicht 13 kann beispielsweise eine Schichtdicke s₁₃ von 0,1 mm mit einer Toleranz von +/- 0,05 mm aufweisen. Die Innenschicht 12 aus PP kann beispielsweise eine Schichtdicke von s₁₂ von 0,4 mm mit einer Toleranz von +/- 0,1 mm aufweisen. Dementsprechend kann beispielsweise die Schichtdicke der Außenschicht 14 aus PPA zur Schichtdicke der Haftvermittlerschicht 13 etwa 10:1 betragen, während das Schichtdickenverhältnis der Außenschicht 14 aus PPA zur Innenschicht 12 aus PP etwa 2,5:1 betragen kann. Die Schichtdicke s₁₂ der Innenschicht 12 aus PP reicht aus, um zu verhindern, dass umlaufende Zähne eines Einschlagdorns eines Leitungsverbinders, der mit dem Einschlagdorn in das innere Lumen 11 des Mehrschichtrohres 1 eingreift, um dieses mit dem Leitungsverbinder zu verbinden, die Innenschicht 12 durchdringt und dementsprechend zu einer Beschädigung dieser medienbeständigen Innenschicht 12 führt. Alternativ zu dem Aufdornen des Mehrschichtrohres 1 auf einen solchen Einschlagdorn eines Leitungsverbinders können Leitungsverbinder und Mehrschichtrohr auch beispielsweise durch Reibschweißen oder Laserschweißen miteinander verbunden werden. In diesem Falle kann die medienbeständige Innenschicht 12 aus PP ggf. auch dünner ausgebildet werden, solange die Medienbeständigkeit bezüglich der mehrschichtigen Rohrwandung 10 des Mehrschichtrohres 1 weiterhin gewährleistet ist, somit ein Eindringen von durch das innere Lumen 10 des Mehrschichtrohres 1 strömendem Medium in das Innere der Rohrwandung, insbesondere zu der Haftvermittlerschicht 13 und/oder der Außenschicht 14 aus PPA verhindert werden kann.

Um das Mehrschichtrohr 1 gemäß Figur 1 herstellen zu können, wird ein Extrusionswerkzeug mit einem Extrusionskopf bzw. einer Extrusionseinheit 2 mit einer Anzahl von Schmelzbereichen oder Schmelzkammern vorgesehen. Eine solche Extrusionseinheit 2 ist schematisch in Figur 2 gezeigt. Diese umfasst hier drei thermisch voneinander getrennte Schmelzbereiche bzw. Schmelzkammern 20, 21, 22. Zwischen den Schmelzkammern 20, 21 ist als thermische Trenneinrichtung z.B. ein erster Isolierspalt 23 angeordnet und zwischen den Schmelzkammern 21 und 22 als thermische Trenneinrichtung z.B. ein zweiter Isolierspalt 24. Die erste Schmelzkammer 20 und die dritte Schmelzkammer 22 können, sofern gewünscht, außenseitig weitere thermische Trenneinrichtungen in Form von z.B. einer Isolierwand 25 und einer Isolierwand 26 aufweisen. Alle drei Schmelzkammern 20, 21, 22 nehmen in sich einen Extrusionsraum 27 auf, in dem das Mehrschichtrohr 1 hergestellt bzw. extrudiert wird. Die Materialien für die einzelnen Schichten 12, 13, 14 des in Figur 1 gezeigten Mehrschichtrohres 1 werden über Einfüllöffnungen 30, 31, 32 in die drei Schmelzkammern 20, 21, 22 eingebracht. Dies ist durch die Pfeile P1, P2 und P3 in Figur 2 angedeutet. Dementsprechend wird über die Einfüllöffnung 30 Polyphthalamid (PPA) zum Ausbilden der Außenschicht 14 in die erste Schmelzkammer 20 eingebracht, über die Einfüllöffnung 31 der Haftvermittler, der insbesondere ein Propylen-Homopolymer oder Copolymer basierter Haftvermittler ist, in die zweite Schmelzkammer 21 und über die Einfüllöffnung 32 das zum Ausbilden der Innenschicht 12 verwendete Polypropylen (PP) in die dritte Schmelzkammer 22 eingebracht. Dies ist in Figur 2 ebenfalls angedeutet.

Alle drei Schmelzbereiche bzw. Schmelzkammern 20, 21 und 22 sind temperierbar, also beheizbar und kühlbar. Hierdurch ist es möglich, die drei Schmelzkammern 20, 21, 22 auf die jeweils zum Schmelzen und Verarbeiten der drei unterschiedlichen Materialien PPA, PP und des Haftvermittlers geeigneten Temperaturen zu bringen. Die erste Schmelzkammer 20 wird dementsprechend mit einer Temperatur t₁ von 280 bis 320 °C, insbesondere einer Temperatur von 290≤ t₁ ≤ 310 °C betrieben. Die von der ersten Schmelzkammer 20 durch den ersten Isolierspalt 23 thermisch getrennte, ansonsten jedoch an diese angrenzende zweite Schmelzkammer 21 wird mit einer Temperatur t₂ von 180 bis 260°C, insbesondere 190 ≤ t₂ ≤ 250 °C betrieben, um den Haftvermittler mit einer geeigneten Temperatur schmelzen und verarbeiten zu können. Die dritte Schmelzkammer 22, die von der zweiten Schmelzkammer 21 über den zweiten Isolierspalt 24 thermisch getrennt, jedoch an diese angrenzend vorgesehen ist, wird vorzugsweise mit einer Temperatur t₃ im Bereich von 180 bis 240°C betrieben, insbesondere mit einer Temperatur von 190 ≤ t₃ ≤ 230 C. Hierdurch ist es möglich, Polypropylen, das zum Ausbilden der Innenschicht 12 in der Schmelzkammer 22 geschmolzen und verarbeitet wird, mit einer geeigneten Temperatur zu erhitzen, zu schmelzen und zu verarbeiten. Alle drei Schichten des Mehrschichtrohres 1 können somit problemlos übereinander extrudiert werden.

Somit kann durch das Vorsehen der thermisch voneinander getrennten ersten, zweiten und dritten Schmelzkammer ein auf das jeweilige Viskositätsverhalten der drei unterschiedlichen Materialien, die für die Ausbildung der drei Materialschichten des Mehrschichtrohres 1 verwendet und in der Extrusionseinheit 2 zu dem Mehrschichtrohr 1 extrudiert werden, jeweils geeignet angepasstes Beheizen und dementsprechend Schmelzen und Verarbeiten der einzelnen Materialien erfolgen. Hierdurch ist es möglich, einen kontinuierlichen Schichtdickenverlauf für alle drei Schichten der mehrschichtigen Rohrwandung 10 des Mehrschichtrohres 1 zu erzielen ohne die Gefahr eines Verlaufens der Materialien ineinander. Durch das Vorsehen der thermischen Trenneinrichtungen in Form der Isolierspalte zwischen den einzelnen Schmelzkammern und gegebenenfalls auch auf der Außenseite der jeweils außenliegenden ersten und dritten Schmelzkammer 20, 22 kann ein unkontrollierter Wärmeübergang zwischen den einzelnen Schmelzbereichen bzw. Schmelzkammern sicher vermieden werden, ebenso wie ein unkontrollierter Wärmeübergang auf die Außenseite der Extrusionseinheit 2, somit ein Wärmeverlust. Dementsprechend ist es möglich, die sehr unterschiedlichen und insbesondere im Hinblick auf ihre Schmelz- und Verarbeitungstemperaturen höchst unterschiedlichen Materialien Polypropylen und Polyphthalamid sowie den Propylen-Homopolymer oder Copolymer basierten Haftvermittler zusammen zu verarbeiten, um ein Mehrschichtrohr kostengünstig herzustellen, das formbeständig, medienbeständig, beständig gegen unterschiedlichste Umwelteinflüsse, wie UV-Strahlung, flexibel, schweißbar ist und eine geringe Feuchtigkeitsaufnahme aufweist und das sowohl für ein Aufdornen des Medienrohres auf ein Dornprofil eines Leitungsverbinders als auch für eine Schweißverbindung zum Verbinden mit einem solchen Leitungsverbinder geeignet ist.

Neben den im Vorstehenden beschriebenen und in den Figuren gezeigten Ausführungsvarianten von Mehrschichtrohren, die eine mehrschichtige Rohrwandung mit zumindest einer Innenschicht und zumindest einer Außenschicht aufweisen, sowie Verfahren zum Herstellen eines solchen Mehrschichtrohres, können noch zahlreiche weitere gebildet werden, auch beliebige Kombinationen der vorstehend genannten Merkmale, wobei die Mehrschichtrohre jeweils zumindest eine Innenschicht aus Polypropylen und zumindest eine Außenschicht aus Polyphthalamid aufweisen und unter Verwendung einer Extrusionseinheit mit thermisch voneinander getrennten Schmelzbereichen zum Schmelzen der einzelnen Schichtmaterialien hergestellt werden können.

### Bezugszeichenliste

- 1: Mehrschichtrohr
- 2: Extrusionseinheit
- 10: mehrschichtige Rohrwandung
- 11: inneres Lumen
- 12: Innenschicht (aus PP)
- 13: Haftvermittlerschicht
- 14: Außenschicht (aus PPA)
- 20: erste Schmelzkammer / erster Schmelzbereich
- 21: zweite Schmelzkammer / zweiter Schmelzbereich
- 22: dritte Schmelzkammer / dritter Schmelzbereich
- 23: erster Isolierspalt
- 24: zweiter Isolierspalt
- 25: Isolierwand
- 26: Isolierwand
- 27: Extrusionsraum
- 30: Einfüllöffnung
- 31: Einfüllöffnung
- 32: Einfüllöffnung
- dₐ: Außendurchmesser von 1
- dᵢ: Innendurchmesser von 1
- s₁₂: Schichtdicke von 12
- s₁₃: Schichtdicke von 13
- s₁₄: Schichtdicke von 14
- t₁: Schmelz-/Verarbeitungstemperatur für PPA
- t₂: Schmelz-/Verarbeitungstemperatur für Haftvermittler
- t₃: Schmelz-/Verarbeitungstemperatur für PP
- P1: Pfeil
- P2: Pfeil
- P3: Pfeil

## Patentansprüche

1. Mehrschichtrohr (1), umfassend eine mehrschichtige Rohrwandung (10) mit zumindest einer Innenschicht (12) und zumindest einer Außenschicht (14),
**dadurch gekennzeichnet, dass**
die zumindest eine Außenschicht (14) aus Polyphthalamid (PPA) und die zumindest eine Innenschicht (12) aus Polypropylen (PP) besteht.

2. Mehrschichtrohr (1) nach Anspruch 1,
**dadurch gekennzeichnet, dass**
zwischen der Außenschicht (14) aus PPA und der Innenschicht (12) aus PP zumindest eine Haftvermittlerschicht (13) angeordnet ist zum Verbinden der Außenschicht (14) aus PPA mit der Innenschicht (12) aus PP.

3. Mehrschichtrohr (1) nach Anspruch 2,
**dadurch gekennzeichnet, dass**
der zumindest eine Haftvermittler der Haftvermittlerschicht (13) ein Propylen-Homopolymer basierter Haftvermittler oder ein Haftvermittler auf Copolymerbasis ist, insbesondere ADMER® QB510E.

4. Mehrschichtrohr (1) nach Anspruch 2 oder 3,
**dadurch gekennzeichnet, dass**
das Verhältnis der Schichtdicke (s₁₄) der Außenschicht (14) aus PPA zu der Schichtdicke (s₁₃) Haftvermittlerschicht (13) 12:1 bis 4,5:1, insbesondere etwa 10:1, beträgt und das Verhältnis der Schichtdicke (s₁₄) der Außenschicht (14) aus PPA zur Schichtdicke (s₁₂) der Innenschicht (12) aus PP 3,5:1 bis 1,5:1, insbesondere etwa 2:1, beträgt.

5. Mehrschichtrohr (1) nach einem der Ansprüche 2 bis 4,
**dadurch gekennzeichnet, dass**
zum Vermeiden eines Kontaktes der Haftvermittlerschicht (13) und/oder der Außenschicht (14) aus PPA mit durch ein inneres Lumen (11) des Mehrschichtrohrs (1) strömendem Medium die Innenschicht (12) aus PP eine Schichtdicke (s₁₂) aufweist, die größer ist als die lichte Höhe von Einschlagdornen eines Dornprofils eines Leitungsverbinders, auf dem das Mehrschichtrohr (1) aufzudornen oder aufgedornt ist, insbesondere die Schichtdicke (s₁₂) der Innenschicht (12) aus PP ≥ 0,25 mm beträgt.

6. Mehrschichtrohr (1) nach einem der Ansprüche 2 bis 5,
**dadurch gekennzeichnet, dass**
das Mehrschichtrohr (1) einen Außendurchmesser (dₐ) von 13 mm und eine Wandstärke von 1,5 mm aufweist, wobei die Außenschicht (14) aus PPA mit einer Schichtdicke (s₁₄) von 1 mm, die Haftvermittlerschicht (13) mit einer Schichtdicke (s₁₃) von 0,1 mm und die Innenschicht (12) aus PP mit einer Schichtdicke (s₁₂) von 0,4 mm vorgesehen sind.

7. Verfahren zum Herstellen eines Mehrschichtrohres (1), insbesondere nach einem der vorstehenden Ansprüche,
**dadurch gekennzeichnet, dass**
zumindest eine Innenschicht aus Polypropylen (PP) und zumindest eine Außenschicht aus Polyphthalamid (PPA) unter Verwendung zumindest eines Haftvermittlers übereinander extrudiert werden unter Verwendung einer Extrusionseinheit (2) mit thermisch voneinander getrennten Schmelzbereichen (20,21,22) zum Schmelzen der Schichtmaterialien.

8. Verfahren nach Anspruch 7,
**dadurch gekennzeichnet, dass**
der zumindest eine Haftvermittler ein Propylen-Homopolymer basierter Haftvermittler oder ein Haftvermittler auf Copolymerbasis ist.

9. Verfahren nach Anspruch 7 oder 8,
**dadurch gekennzeichnet, dass**
die Schmelzbereiche (20,21,22) getrennt voneinander beheizt und gekühlt werden.

10. Verfahren nach einem der Ansprüche 7 bis 9,
**dadurch gekennzeichnet, dass**
das PPA in einem ersten Schmelzbereich(20) mit einer Schmelztemperatur (t₁) von 250 bis 270 °C geschmolzen wird, der zumindest eine Haftvermittler in einem zweiten, an den ersten Schmelzbereich (20) angrenzenden, gegenüber diesem durch eine erste thermische Trenneinrichtung (23) abgetrennten Schmelzbereich (21) mit einer Schmelztemperatur (t₂) von 150 bis 170 °C, insbesondere einer Temperatur (t₂) von 160 °C, und das PP in einem dritten, an den zweiten Schmelzbereich (21) angrenzenden, gegenüber diesem durch eine zweite thermische Trenneinrichtung (24) abgetrennten Schmelzbereich (22) mit einer Schmelztemperatur (t₃) von 150 bis 170 °C, insbesondere einer Temperatur (t₃) von 160 °C, geschmolzen wird.
